# EUROPÄISCHE PATENTANMELDUNG

(11) **EP 4 654 562 A1**
(43) Veröffentlichungstag der Anmeldung: **26.11.2025**
(21) Anmeldenummer: 25171889.6
(22) Anmeldetag: 23.04.2025
(51) Int. Cl.: H04L 69/16, H04L 69/325, H04L 69/22

(54) **VERFAHREN ZUM ERWEITERN EINES HEADERS EINES DATENPAKETS**

(30) Priorität: 24.05.2024 DE 102024204819
(71) Anmelder: Siemens Mobility GmbH, 80997 München (DE)
(72) Erfinder: Pinkert, Tjeerd, 38118 Braunschweig (DE)
(74) Vertreter: Siemens Patent Attorneys

(57) **Zusammenfassung**

Es wird ein Computer-implementiertes Verfahren beschrieben zum Erweitern eines Headers (120), insbesondere eines Internet Protocol (IP) Headers, das Verfahren aufweisend:
i) Bereitstellen eines Datenpakets (100) das aufweist: eine obere Schicht (110) und eine untere Schicht (119),
wobei die untere Schicht (119) den Header (120) aufweist, und
wobei der Header (120) ein nächste-Protokollnummer-Feld (121) aufweist, in welches die Protokollnummer des als nächstes auszuführenden Protokolls eingetragen wird; und

ii) Einfügen zumindest eines Zwischenpakets (150) in eine Zwischenschicht (140) zwischen der oberen Schicht (110) und dem Header (120) mittels Eintragen der Zwischenschicht-Protokollnummer (125, 0xFF) in das nächste-Protokollnummer-Feld (121).

## Beschreibung

### Technisches Gebiet

Die Erfindung bezieht sich auf ein Verfahren zum Vergrößern eines Protocol-Headers (insbesondere eines Internet Protocol (IP) Headers), wobei das Verfahren aufweist: i) Bereitstellen eines Datenpakets das aufweist: eine obere Schicht und eine untere Schicht, wobei die untere Schicht den Header aufweist, und wobei der Header ein nächste-Protokollnummer-Feld aufweist, in welches die Protokollnummer des als nächstes auszuführenden Protokolls eingetragen wird, und ii) Einfügen zumindest eines Zwischenpakets einer Zwischenschicht zwischen der oberen Schicht und dem Header mittels Eintragen der Zwischenschicht-Protokollnummer in das nächste-Protokollnummer-Feld. Ferner bezieht sich die Erfindung auf eine Vorrichtung zur Datenverarbeitung, welche eingerichtet ist, das Verfahren auszuführen.

Die Erfindung kann sich somit auf das technische Gebiet von Netzwerk-Protokollen beziehen, beispielsweise im Kontext von Schienenfahrzeugen.

### Technischer Hintergrund

In Netzwerken, beispielsweise im Bereich von Schienenfahrzeugen bzw. Schienenfahrzeug-Infrastruktur, findet gewöhnlich ein Datenaustausch statt, wobei Datenpakete zwischen Sendern und Empfänger verschickt werden. Dies geschieht nach bestimmten Protokollen, z.B. nach dem Internet Protocol (IP). Gemäß dem IP weist ein Datenpaket beispielsweise eine untere Schicht (Daten-bezogen) und eine obere Schicht (Transport-bezogen) auf. Die untere Schicht enthält die Daten in einem Datenbereich (Payload) und hat einen Header mit Steuerinformationen.

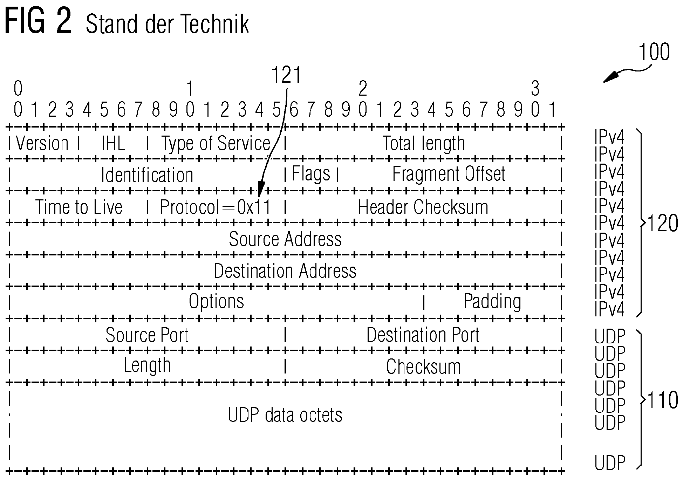

**Figur 2** zeigt ein Beispiel eines konventionellen IP-Datenpakets 100. Dieses hat eine obere Schicht 110 (UDP implementiert) und eine untere Schicht 119 (IPv4 implementiert). Aus der Darstellungsweise ist erkennbar, dass die obere Schicht 110 eigentlich im Datenbereich der unteren Schicht 119 angeordnet ist. Die untere Schicht 119 weist den IP-Header 120 auf, der die Steuerinformationen enthält: Quell-Adresse, Zieladresse, Prüfsumme, Länge, Protokollnummer, usw. Ferner weist der IP-Header 120 ein nächste-Protokollnummer-Feld 121 auf, in welchem das als nächstes auszuführende Protokoll identifiziert ist. Dies ist konventionell das Protokoll der oberen Schicht (UDP, hier 0x11), denn dieses Protokoll soll als nächstes ausgeführt werden, um den Transport des Datenpakets zu steuern. Basierend auf dieser Protokollnummer wird der IP-Handler die IP-Daten an den UDP-Handler weitergeben.

Der Platz in einem solchen Header ist aber sehr begrenzt. Im Falle des IPv4-Headers z.B. ist der Platz für IP-Optionen auf 10 Wörter oder 40 Oktette an Daten begrenzt. Gerade in Hinblick auf zukünftige Anwendung kann dieser Platz aber schlicht nicht ausreichend sein. Weil der Datenverkehr in einem Netzwerk aber etablierten Protokollen folgt, kann nicht einfach ein Header vergrößert/erweitert werden. Entsprechend ist in diesem Bereich keine Flexibilität gegeben.

### Zusammenfassung der Erfindung

Es kann ein Bedarf bestehen, den Header eines Datenpakets flexibel einzusetzen, insbesondere zusätzliche Daten aufzunehmen.

Ein Verfahren und eine Vorrichtung zur Datenverarbeitung werden im Folgenden beschrieben.

Gemäß einem ersten Aspekt der Erfindung wird ein (Computer-implementiertes) Verfahren beschrieben zum Erweitern eines (Datenpaket) Headers, insbesondere eines Internet Protocol (IP) Headers (z.B. gemäß IPv4), das Verfahren aufweisend:
i) Bereitstellen des Datenpakets, welches aufweist: eine obere Schicht (z.B. UDP) (und eine Zwischenschicht) und eine untere Schicht (z.B. IPv4; insbesondere befindet sich die obere Schicht (und die Zwischenschicht) im Datenteil der unteren Schicht),
   ia) wobei die untere Schicht den (IP) Header aufweist, und
   ib) wobei der Header ein nächste-Protokollnummer-Feld aufweist, in welches die Protokollnummer des als nächstes auszuführenden Protokolls eingetragen wird (gewöhnlich die Protokollnummer der oberen Schicht); und
ii) Einfügen zumindest eines Zwischenpakets (in die Zwischenschicht) zwischen der oberen Schicht und dem Header mittels Eintragen der Zwischenschicht-Protokollnummer (diese kann zufällig sein oder zugewiesen, z.B. von IANA) in das nächste-Protokollnummer-Feld. Insbesondere kann hierdurch der Header zu einem erweiterten Header werden, welcher ein oder mehr Zwischenpakete der Zwischenschicht umfasst.

Gemäß einem zweiten Aspekt der Erfindung wird eine Vorrichtung zur Datenverarbeitung beschrieben, die zumindest einen Prozessor aufweist, und eingerichtet ist das Verfahren wie oben beschrieben auszuführen.

Im Kontext des vorliegenden Dokuments kann der Begriff "Datenpaket" insbesondere eine (formatierte) Dateneinheit bezeichnen, die über ein Netzwerk (z.B. Internet) übertragen wird. In Netzwerken können Datenpakete verwendet werden, um z.B. Benutzerdaten von einer Quelle zu einem Ziel zu transportieren. Ein Datenpaket weist bevorzugt einen Header auf, der Steuerinformationen enthält. Ein Datenpaket weist zudem die zu transportierenden Daten in einem Datenbereich auf (Payload). Ferner kann ein Datenpaket eine Prüfsumme aufweisen, um die Sicherheit zu erhöhen. Die Prüfsumme kann auch Teil des Headers sein. Im vorliegenden Kontext kann ein Datenpaket gemäß einem bestimmten Protokoll konfiguriert sein. Beispielsweise kann ein Datenpaket konfiguriert sein gemäß dem Internet Protocol (IP), z.B. gemäß IPv4 oder IPv6; prinzipiell kann aber z.B. auch jedes Schichtpaar nach dem ISO/IEC 7498-1 OSI Modell verwendet werden.

Im Kontext des vorliegenden Dokuments kann der Begriff "Header" insbesondere einen Bereich/Teil eines Datenpakets bezeichnen, der Steuerinformationen enthält. Ein Header kann beispielsweise aufweisen (insbesondere organisiert in Feldern): Quell- und Zieladressen, Protokoll-Information/Nummer, Länge, Verifikation (z.B. Prüfsumme), nächste-Protokollnummer. Ein Header kann mit einem Protokoll-Handler (z.B. IP-Handler) einer Vorrichtung zur Datenverarbeitung interagieren, so kann z.B. der Handler anhand der Protokollnummer das Datenpaket gemäß dem gewünschten Protokoll bearbeiten.

Im Kontext des vorliegenden Dokuments kann der Begriff "erweiterter Header" insbesondere einen Header eines Datenpakets bezeichnen, welcher mittels einer Zwischenschicht erweitert bzw. vergrößert wurde. Die Zwischenschicht kann ein oder mehr Zwischenpakete aufweisen, in denen zusätzliche Datenbereiche vorhanden sind, in welchen zusätzliche Daten gespeichert werden können. Somit kann ein erweiterter Header mehr Daten/Informationen aufnehmen/transportieren als ein konventioneller Header.

Im Kontext des vorliegenden Dokuments kann der Begriff "untere Schicht" (lower layer) insbesondere eine Schicht bezeichnen, die in einem Netzwerk-orientierten Schichtenmodell (z.B. OSI-Modell) für Datenübertragung/Datenintegrität zuständig ist und insbesondere den Header aufweist. Im Kontext des IP kann die untere Schicht die physikalische Schicht (physical layer) und/oder die Sicherungsschicht (data link layer) bezeichnen. Eine mögliche Implementierung kann z.B. IPv4 oder IPv6 sein.

Im Kontext des vorliegenden Dokuments kann der Begriff "obere Schicht" (upper layer) insbesondere eine Schicht bezeichnen, die in einem Netzwerk-orientierten Schichtenmodell (z.B. OSI-Modell) für Datenübermittlung zuständig ist und insbesondere nicht den Header aufweist. Im Kontext des IP kann die obere Schicht die Transportschicht (transport layer), die Sitzungsschicht (session layer), die Darstellungsschicht (presentation layer) oder die Anwendungsschicht (application layer) bezeichnen. Mögliche Implementierungen sind z.B. UDP oder TCP.

Im Kontext des vorliegenden Dokuments kann der Begriff "Zwischenschicht" insbesondere eine Schicht bezeichnen, die zwischen dem Header der unteren Schicht und der oberen Schicht angeordnet ist. Die Zwischenschicht kann mittels einer Zwischenschicht-Protokollnummer im Header eingeführt werden. Bevorzugt kann die Zwischenschicht ein oder mehr Zwischenpakete aufweisen, in die dann zusätzliche Daten eingesetzt werden können.

Im Kontext des vorliegenden Dokuments kann der Begriff "nächste-Protokollnummer-Feld" insbesondere ein Feld des Headers bezeichnen, in das die Protokollnummer (Identifizierung) des als nächstes auszuführenden Protokolls eingetragen wird. Gewöhnlich wird in den Header die Protokollnummer der oberen Schicht eingefügt (z.B. 0x11). In einem Ausführungsbeispiel kann aber auch die Protokollnummer der Zwischenschicht bzw. eines Zwischenpakets der Zwischenschicht eingetragen werden. In diesem Fall wird der Handler das Zwischenschicht-Protokoll anstelle des Protokolls der oberen Schicht ausführen.

Im Kontext des vorliegenden Dokuments kann der Begriff "Zwischenschicht-Protokollnummer" insbesondere eine Protokollnummer bezeichnen (z.B. 0xFF), die die Zwischenschicht (bzw. Zwischenpakete der Zwischenschicht) als nächstauszuführendes Protokoll identifiziert. Die Zwischenschicht-Protokollnummer kann zufällig gewählt sein. In einem weiteren Beispiel kann die Zwischenschicht-Protokollnummer eine registrierte bzw. zugewiesene Protokollnummer sein. Beispielsweise kann bei der IANA eine Protokollnummer beantragt und dann zugewiesen werden. In einem Ausführungsbeispiel kann die zugewiesene Zahl egal sein, ist aber im Kontext eines begrenzten Netzwerkes eindeutig/einzigartig (in einem Beispiel müssen alle Rechner im Netzwerk dieselbe Protokoll-Definition für diese Nummer verwenden). In einem Ausführungsbeispiel wissen die Empfänger in diesem Netzwerks, dass diese spezifische Nummer das Zwischenschichtprotokoll andeutet. In einem Beispiel kann der Weg über IANA sicherstellen, dass diese Protokollnummer im globalen Netzwerk/Internet eindeutig/einzigartig ist.

Gemäß einem exemplarischen Ausführungsbeispiel kann die Erfindung auf der Idee basieren, dass der Header eines Datenpakets flexibel einsetzbar ist (insbesondere zusätzliche Daten aufgenommen werden können), wenn der Header mittels Zwischenpaketen in einer Zwischenschicht erweitert wird, wobei die Zwischenpakete jeweils durch das nächste-Protokollnummer-Feld des Headers aufgerufen werden.

Konventionell ist der Platz in einem Header sehr begrenzt, insbesondere bei IPv4. Erfindungsgemäß kann aber eine frei nutzbare Header-Erweiterung des an sich statischen Protokolls der unteren Schicht gelingen. Diese kann flexibel eingesetzt werden, wenn das Protokoll der unteren Schicht keine oder nicht genügend Flexibilität im Header aufweist.

In einem Beispiel übernimmt ein Zwischenschicht-Protokoll-Handler vom IP-Handler, wenn das Zwischenschicht-Protokoll als nächstes Protokoll angegeben ist. Die Zwischenschicht-Blöcke (bzw. Zwischenpakete) können verkettet sein (jedes Zwischenpaket gibt ein weiteres Zwischenpaket als nächstes Protokoll an), so dass mehrere Zwischenpakete (jeweils mit Daten) ausgeführt werden können. Gibt ein Zwischenpaket (insbesondere das letzte) die Protokollnummer der oberen Schicht (bzw. des UDP Protokolls) als nächstes Protokoll an, dann wird der Zwischenschicht-Protokoll-Handler die Kontrolle an den IP-Handler zurückgeben bzw. dem UDP-Handler übergeben. In einem Ausführungsbeispiel wird der Zwischenschicht-Protokoll-Handler wie der Protokoll-Handler für die obere Schicht durch einen Programmierer im Operating System implementiert, basierend auf den Protokoll-Spezifikationen des Zwischenschichtprotokolls.

### Exemplarische Ausführungsbeispiele

Gemäß einem Ausführungsbeispiel weist das Zwischenpaket (der Zwischenschicht) ein nächste-Protokollnummer-Feld des Zwischenpakets auf, in welches die Protokollnummer des als nächstes auszuführenden Protokolls eingetragen wird. In einem Beispiel kann die Protokollnummer eines weiteren Zwischenpakets der Zwischenschicht eingetragen werden. In einem weiteren Beispiel kann die Protokollnummer der oberen Schicht eingetragen werden (z.B. um das UDP Protokoll zu starten). In einem Beispiel entspricht die Protokollnummer der Protokollnummer der unteren Schicht. Dies kann eine für das Zwischenschicht-Protokoll kennmerkende Limitierung auf die Protokollnummer der Zwischenschicht sein.

Gemäß einem Ausführungsbeispiel weist das Verfahren auf: Bereitstellen zumindest eines weiteren Zwischenpakets zwischen dem Zwischenpaket und der oberen Schicht mittels Eintragen einer weiteren Zwischenschicht-Protokollnummer (z.B. 0xFF) in das nächste-Protokollnummer-Feld des Zwischenpakets. Dies kann den Vorteil haben, dass der Header sehr flexibel erweitert werden kann, denn prinzipiell kann jedes Zwischenpaket ein weiteres Zwischenpaket als nächstes auszuführendes Protokoll angeben.

Gemäß einem Ausführungsbeispiel weist das weitere Zwischenpaket ein weiteres nächste-Protokollnummer-Feld des weiteren Zwischenpakets auf, in welches die Protokollnummer des als nächstes auszuführenden Protokolls eingetragen wird. Wie oben beschrieben, kann diese Verkettung der Zwischenpakete in flexibler Weise fortgesetzt werden.

Gemäß einem Ausführungsbeispiel weist das Verfahren auf: Einfügen der Protokollnummer (z.B. 0x11) zum Identifizieren des Protokolls der oberen Schicht als nächstes auszuführendes Protokoll in das nächste-Protokollnummer-Feld des Zwischenpakets oder das weitere nächste-Protokollnummer-Feld des weiteren Zwischenpakets. Dadurch kann die Zwischenschicht (mit den Zwischenpaketen) wieder verlassen werden und der obere Schicht Handler (z.B. UDP Handler) übernimmt.

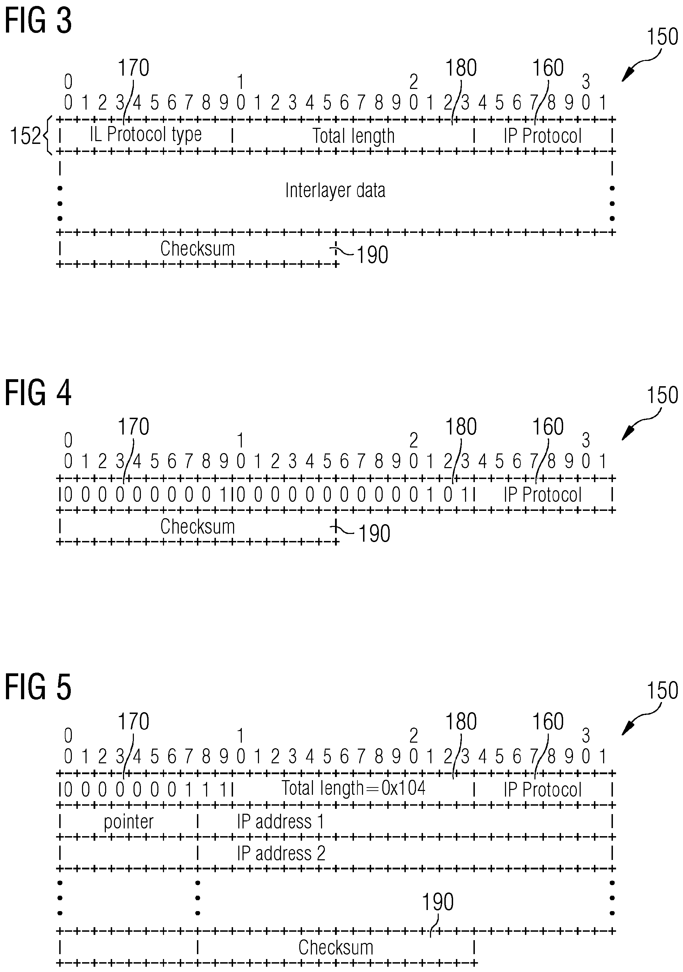

Gemäß einem Ausführungsbeispiel weist das Verfahren auf: Bereitstellen von Daten in das Zwischenpaket und/oder das weitere Zwischenpaket. In einem Beispiel weist ein Zwischenpaket (siehe z.B. Figur 3) einen Datenbereich auf, in welchen zusätzliche Daten eingebracht werden können. Auf diese Weise kann der Header in flexibler Weise zu einem erweiterten Header werden.

Gemäß einem Ausführungsbeispiel wird ein IP Standard verwendet, z.B. IPv4 und/oder IPv6 (für die untere Schicht). Gemäß einem Ausführungsbeispiel weist die obere Schicht eine TCP- und/oder eine UDP-Funktionalität auf. Dies kann den Vorteil haben, dass das Verfahren in wirtschaftlich wichtige und etablierte Funktionen implementiert werden kann. Jedoch sind auch eine Vielzahl weiterer Anwendungen bei Schicht-basierten Netzwerk-Protokollen möglich.

Gemäß einem Ausführungsbeispiel weist das Datenpaket zumindest eine registrierte, insbesondere IANA registrierte, Protokollnummer auf. Gemäß einem Ausführungsbeispiel weist der Header eine (beliebige) Zwischenschicht-Protokollnummer, insbesondere IANA registriert, auf. Gemäß einem Ausführungsbeispiel weist der Header eine Zwischenschicht-Länge auf. Gemäß einem Ausführungsbeispiel weist der Zwischenschicht-Header eine Zwischenschicht-Paket-Länge auf. Gemäß einem Ausführungsbeispiel weist der weitere Zwischenschicht-Header eine weitere Zwischenschicht-Paket-Länge auf.

Gemäß einem Ausführungsbeispiel weist der Zwischenschicht-Header eine spezifische Zwischenschicht-Protokollnummer (z.B. 0x3FF) auf. Gemäß einem Ausführungsbeispiel weist der weitere Zwischenschicht Header eine weitere spezifische Zwischenschicht-Protokollnummer (z.B. 0x3FE) auf. In dieser Weise können die Zwischenpakete in einer bestimmten (erwünschten) Reihenfolge abgearbeitet werden. Dadurch kann eine effiziente Organisation der Zwischenschicht gelingen. Der Begriff "spezifische Zwischenschicht-Protokollnummer" kann sich in diesem Zusammenhang auch auf einen Zwischenschicht-Typ oder einen Zwischenpaket-Typ beziehen. Insbesondere kann damit ein spezifisches Zwischenpaket identifiziert werden.

Gemäß einem Ausführungsbeispiel ist die zumindest eine Zwischenschicht bzw. zumindest ein Zwischenpaket einem eigenen Protocol-Handler zugeordnet. Gemäß einem Ausführungsbeispiel ist jede Zwischenschicht bzw. jedes Zwischenpaket einem eigenen Protocol-Handler zugeordnet. In diesem Kontext kann ein Protocol-Handler eine Software sein, die spezifische Netzwerkprotokolle implementiert, um die Kommunikation zwischen verschiedenen Anwendungen oder Geräten zu ermöglichen. Sie verwalten den Austausch von Daten gemäß den Regeln und Spezifikationen des jeweiligen Protokolls, z.B. IPv4, UDP, TCP, etc. Wird ein Zwischenschicht-Protocol Handler aufgerufen (über das nächste auszuführende Protokoll-Feld), so werden Zwischenpakete abgearbeitet bis wieder ein anderer Protocol-Handler aufgerufen wird.

Gemäß einem Ausführungsbeispiel weist das Zwischenpaket eine erste Prüfsumme auf. Gemäß einem Ausführungsbeispiel weist das weitere Zwischenpaket eine zweite Prüfsumme auf. Die Prüfsumme kann hierbei in dem jeweiligen Zwischenpaket-Header eingebracht sein. Dies kann den Vorteil haben, dass die Sicherheit des Datenverkehrs und/oder die Fehlerfreiheit erhöht wird. Der Begriff "Sicherheit" kann im vorliegenden Kontext die Bedeutung haben, dass eine bestimmte Fehlerrate kleiner wird.

Gemäß einem Ausführungsbeispiel wird das Verfahren im Kontext von Schienenfahrzeugen und/oder Schienen(fahrzeug)-Infrastruktur verwendet. In einem Ausführungsbeispiel kann das Netzwerk-System mit einem oder mehr Schienenfahrzeug(en) und/oder mit weiteren Komponenten der Infrastruktur gekoppelt sein (drahtlos und/oder drahtgebunden). Beispielsweise können zwei oder mehr Schienenfahrzeuge miteinander kommunikativ gekoppelt sein. Ferner kann ein Schienenfahrzeug-Kontrollsystem (z.B. von einer Leitstelle) mit dem Netzwerk-System bzw. dem Schienenfahrzeug gekoppelt sein. Das Schienenfahrzeug-Kontrollsystem kann das Netzwerk-System ergänzen und/oder steuern/regeln. In einem Ausführungsbeispiel kann das Netzwerk-System Teil eines größeren Schienenfahrzeug-Infrastruktur-Netzwerkes sein. Zu beachten ist in einem Beispiel, dass im Kontext von Schienenfahrzeugen besonders hohe Sicherheitsstandards zu erfüllen sind.

Gemäß einem Ausführungsbeispiel werden verwendet:
i) eine registrierte Protokollnummer für das Protokoll (Datenpaket) (z.B. für die IP Schichten).
ii) einen Protokoll-Header, der aufweist:
   a) eine Zwischenschicht-Protokollnummer (potentiell global registriert, z.B. IANA).
   b) eine Zwischenschicht-Header Länge (in Oktetten).
   c) eine nächstes-Protokollnummer ("next protocol" number) (z.B. für die IP Schichten).
   d) Zwischenschicht-Daten die aus zusätzlichen Oktetten bestehen, wie von der Header Länge indiziert.

Mehrere Zwischenschicht-Protokolle können zwischen den ursprünglichen Header und den Datenbereich (Payload) eines (IP) Datenpakets eingefügt werden.

Das Zwischenschicht-Protokoll kann in einem Beispiel zwischen die IP-Schicht und die Transportschicht (z.B. UDP, TCP) angeordnet werden. In diesem Beispiel kann eine Protokollnummer (IANA) dem Protokoll zugewiesen werden. Da das Zwischenschicht-Protokoll in hohem Maße mit dem untere Schicht-Handler in Bezug steht, kann eine weitere Implementierungsmöglichkeit in einem Beispiel eine Erweiterung des untere Schicht-Handlers sein, z.B. IPv4-Protocol-Handler.

In einem Ausführungsbeispiel der Zwischenschicht-Implementierung können z.B. 63 Router ihre Adressen in einer Tabelle platzieren. Ein weiterer Anwendungsfall kann die Verwendung von IP-Optionen sein, die eine Länge von mehr als 10 Wörter aufweisen. Sichern von IP-Optionsinhalten durch Verwendung von Verschlüsselung oder digitale Signaturen können ein solcher Fall sein.

In einem Ausführungsbeispiel kann das Zwischenschicht-Protokoll dem Anwender einen "beliebig großen" zusätzlichen Protokollraum ermöglichen, dessen Größe durch die Länge der Zwischenschicht/-paket Protokollnummer bestimmt wird. Dies kann das Einfügen beliebiger Daten, z.B. neu definierte IP-Optionen, außerhalb des Optionsraums des IP-Headers ermöglichen und es erlauben, (insbesondere bei IPv4) mehr als 10 Wörter an Daten zu verwenden. Dies kann erforderlich sein, wenn IP-Optionen kryptografisch starke Signaturen oder kryptografische Codierung erfordern. Das Zwischenschicht-Protokoll kann auf verschiedenen Schichten eines Netzwerksystems implementiert werden, z.B. auf der Datenverbindungsschicht oder der IP-Schicht.

In einem Ausführungsbeispiel kann das Zwischenschicht-Protokoll speziell für Routing konzipiert sein. Dieses Protokoll kann das Einfügen beliebiger Daten zwischen Headern, ermöglichen, solange die Gesamtpaketlänge nicht überschritten wird. Dies kann maximale Flexibilität für die Zwischenschicht-Header-Daten bedeuten. Da der Header selbst standardisiert ist, können Hosts wählen, ob sie Zwischenschicht-Header überspringen möchten, wenn die Verarbeitung unerwünscht ist, oder Protokolltypen neu und älteren Implementierungen unbekannt sind.

In einem Ausführungsbeispiel wird das Zwischenschicht-Protokoll unter Verwendung der nächsten Protokollnummern aufgerufen, mittels der Implementierung einer rekursiven/repetitiven Blockstruktur zwischen der unteren Schicht und Protokollen der oberen Schicht. Die gesamte Datenstruktur kann in einem Beispiel jedoch nicht über die Grenze hinauswachsen, die durch die obere Länge des Protokolls der unteren Schicht festgelegt wird. Im Falle des IPv4-Protokolls liegt diese Obergrenze bei 64 KByte.

In einem Ausführungsbeispiel können folgende Funktionen umgesetzt werden:
1) ein Feld, das die untere Protokollnummer wiederholt (bei IPv4 das Protokoll-Feld).
2) ein Feld, dass die Länge des Zwischenschicht-Protokoll Blocks indiziert. Diese Länge umfasst den Header und kann z.B. in Bits, Oktetten oder Worten angegeben sein.
3) ein Feld, das die Art des Inhalts von Zwischenschicht-Daten indiziert. Dies können Benutzer-Daten sein, oder es kann spezifiziert werden, welcher Parser für die Zwischenschicht-Daten verwendet werden soll.
4) einen (optionalen) Zwischenschicht Benutzer-Daten Block.
5) einen (optionalen) Prüfsummen Block.

In vielen Fällen kann der Prüfsummen Block übersprungen werden, da die untere Ebene bereits eine Prüfsumme über die transportierte Protokoll-Dateneinheit enthält. Diese Prüfsumme enthält dann die Daten der Zwischenschicht-Blöcke, die nicht getrennt von der Protokoll-Dateneinheit der oberen Schicht betrachtet werden. Die Länge der Protokoll-Dateneinheit der unteren Schicht kann die Länge der Protokoll-Dateneinheit der oberen Schicht plus die Länge aller Zwischenschicht-Protokoll Blöcke sein.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt ein Datenpaket mit Zwischenpaketen gemäß einem exemplarischen Ausführungsbeispiel der Erfindung.
Figur 2 zeigt ein konventionelles Internet Protocol Datenpaket.

Die Figuren 3 bis 5 zeigen jeweils ein Zwischenpaket gemäß exemplarischen Ausführungsbeispielen der Erfindung.

### Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

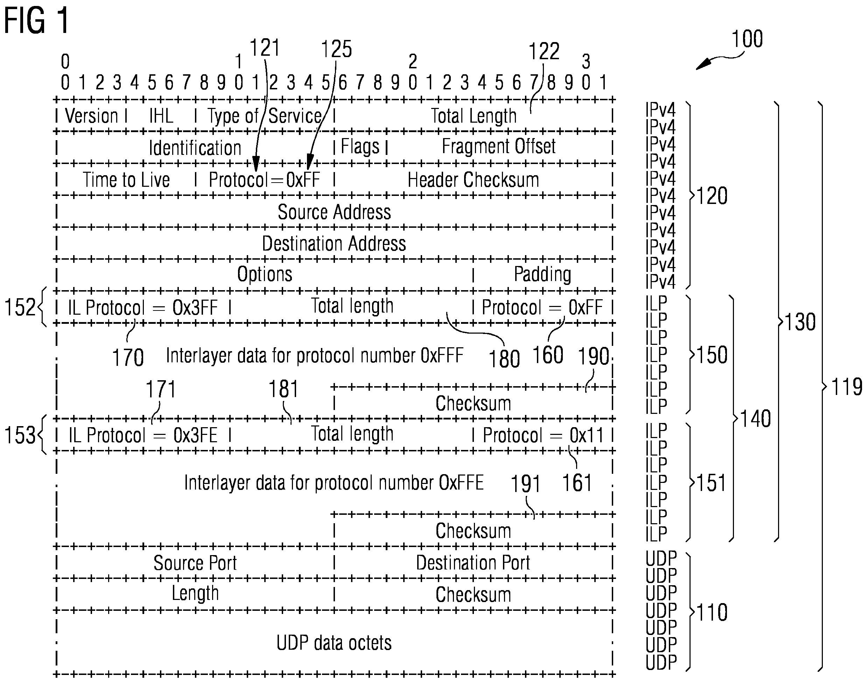

**Figur 1** zeigt ein Datenpaket 100 gemäß einem exemplarischen Ausführungsbeispiel der Erfindung, das gemäß dem Internet Protocol (IP) implementiert ist. Das Datenpaket 100 weist einen Stapel von Schichten auf, die nach dem IP abgearbeitet werden. Die untere Schicht 119 umfasst hierbei den Header 120 (hier gemäß IPv4 Protokoll) und den Datenbereich. Die obere Schicht 110 ist für den Paket-Transport zuständig und hier gemäß dem UDP-Protokoll implementiert. Im Gegensatz zu konventionellen Datenpaketen ist erfindungsgemäß eine Zwischenschicht 140 implementiert. Zu beachten ist, dass sich die obere Schicht 110 und die Zwischenschicht 140 eigentlich im Datenbereich der unteren Schicht 119 befinden.

Der Header 120 der unteren Schicht 119 weist eine Mehrzahl von (standarisierten) Feldern auf, eines davon ist das nächste-Protokollnummer-Feld 121 (im Beispiel: Protocol = 0xFF), in welches die Protokollnummer des als nächstes auszuführenden Protokolls eingetragen wird.

Im Gegensatz zu konventionellen Lösungen wird in dieses Feld 121 jedoch nicht die Protokollnummer der oberen Schicht (im Beispiel wäre dies Protocol = 0x11) eingetragen, sondern eine Zwischenschicht-Protokollnummer 125 (0xFF) wird in das nächste-Protokollnummer-Feld 121 eingetragen.

Der IP-Protocol-Handler wird daher nicht wie gewöhnlich zum UDP-Protokoll übergehen, sondern an einen Zwischenschicht-Handler übergeben. Im gezeigten Beispiel weist die Zwischenschicht 140 zwei Zwischenpakete 150, 151 auf. Das Zwischenpaket 150 hat einen Zwischenpaket-Header 152 und das weitere Zwischenpaket 151 hat einen weiteren Zwischenpaket-Header 153. Ferner hat das Zwischenpaket 150 einen Datenbereich und eine Prüfsumme 190 und das weitere Zwischenpaket 151 hat einen weiteren Datenbereich und eine weitere Prüfsumme 191.

Im Zwischenpaket-Header 152 ist angegeben: spezifische Zwischenschicht/Zwischenpaket (IL) Protokollnummer 170 (hier 0x3FF), Länge 180, und nächste-Protokollnummer-Feld 160 des Zwischenpakets 150 (hier ist die Zwischenschicht-Protokollnummer 0xFF eingetragen). Im weiteren Zwischenpaket-Header 153 ist angegeben: weitere spezifische Zwischenschicht/Zwischenpaket Protokollnummer 171 (hier 0x3FE), weitere Länge 181, und nächste-Protokollnummer-Feld 161 des weiteren Zwischenpakets 151 (hier ist die Protokollnummer 0x11 der oberen Schicht 110 eingetragen).

Die Protokollnummer der Zwischenschicht 140 für das Feld IPv4-Protokoll ist hier 0xFF. Die Zwischenschicht/Zwischenpaket-Protokolltypen (spezifische Zwischenpaket-Protokollnummer) sind hier 0x3FE und 0x3FF. Jedes dieser Protokolle verfügt in diesem Beispiel über einen eigenen Protocol-Handler. Das Protokoll 0x11 ist dann wieder das UDP-Protokoll.

Der Zwischenschicht-Handler interpretiert den ersten Block von Zwischenschicht-Protokoll-Daten (z.B. erstes Zwischenpaket 150). Anschließend liest er die IP-Protokollnummer aus dem Zwischenschicht-Protokoll-Header (z.B. Zwischenpaket-Header 152), wobei das nächste Protokoll 0xFF ist (siehe 160). Somit interpretiert der Zwischenschicht-Protocol-Handler auch den nächsten Block von Zwischenschicht-Protokoll-Daten (hier weiteres Zwischenpaket 151). Danach liest er die IP-Protokollnummer aus dem Header des zweiten Blocks von Zwischenschicht-Protokoll-Daten (weiterer Zwischenpaket-Header 153), der 0x11 ist (siehe 161). Der Zwischenschicht-Protocol-Handler erkennt, dass keine Zwischenschicht-Datenblöcke mehr zu erwarten sind, und übergibt entweder die Kontrolle zurück an den IP-Layer-Handler oder an den Handler für die nächste Ebene (hier UDP-Protokoll).

Folgende Schritte werden somit ausgeführt:
i) Bereitstellen zumindest eines weiteres Zwischenpakets 151 zwischen dem Zwischenpaket 150 und der oberen Schicht 110 mittels Eintragen einer weiteren Zwischenschicht-Protokollnummer 125, 0xFF in das nächste-Protokollnummer-Feld 160 des Zwischenpakets 150; wobei das weitere Zwischenpaket 151 ein weiteres nächste-Protokollnummer-Feld 161 des weiteren Zwischenpakets 151 aufweist, in welches die Protokollnummer des als nächstes auszuführenden Protokolls eingetragen wird; und
ii) Einfügen der Protokollnummer 0x11 zum Identifizieren des Protokolls der oberen Schicht 110 als nächstes auszuführendes Protokoll in das weitere nächste-Protokollnummer-Feld 161 des weiteren Zwischenpakets 151.

Durch das Einfügen der Zwischenschicht 140 mit den Zwischenpaketen 150, 151 in den Header 120 der unteren Schicht 119 wird dieser zu einem erweiterten Header 130. Hierdurch ergeben sich eine Vielzahl von Möglichkeiten zur flexiblen Organisation von Daten in einem standardisierten Datenpaket mit Schichtstruktur.

Die **Figuren 3 bis 5** zeigen jeweils ein Zwischenpaket 150 gemäß exemplarischen Ausführungsbeispielen der Erfindung.

**Figur 3** zeigt ein Zwischenpaket 150 mit Zwischenpaket Header 152, Datenbereich (interlayer data) und Prüfsumme 190. Der Header 152 weist auf: spezifische Protokollnummer 170, Länge 180, und nächste-Protokollnummer-Feld 160 des Zwischenpakets 150.

Ein 10-Bit Zwischenschicht-Protokolltyp ermöglicht 1024 Zwischenschicht-Protokolltypen. Die IP-Optionstypen werden wiederverwendet; bereits 256 dieser Protokollnummern sind vergeben, so dass noch genügend Platz für neue Protokolldefinitionen bleibt. Die Länge wird in Oktetten definiert, ein 16-Bit-Längenbezeichner würde es erlauben, den gesamten IP-Benutzerdatenraum als Zwischenschichtraum zu nutzen. Dies ist nicht unbedingt notwendig; eine Länge von 16kByte kann als ausreichend gelten. Dann bleiben 8 Bit für die IP Protokollnummer übrig, die benötigt wird, um vom Parsen von Zwischenschicht-Protokoll Blöcken zum normalen Parsen des Protokollstapels zurückzukehren. Eine 16-Bit-Prüfsumme, wie sie im UDP-Protokoll verwendet wird, kann der letzte Teil der Protokoll-Dateneinheit der Zwischenschicht sein und kann in der Länge der Protokoll-Dateneinheit enthalten sein.

Im gezeigten Beispiel werden folgende Bezeichnungen verwendet:
Interlayer (IL) Protocol type 170: die spezifische Zwischenschicht-Protokollnummer (bzw. der Zwischenschicht-Protokolltyp) gibt an, wie die Zwischenschicht-Daten interpretiert werden, insbesondere die durch eine separate Zwischenschicht-Protokollspezifikation definiert sind.

Total length 180: Länge des Zwischenschicht-Protokolls in Oktetten.

IP Protocol 160: Protokollnummer des nächsten Header-Teils.

Interlayer data: das Zwischenschicht-Protokoll spezifiziert den Zwischenschicht-Datenbereich. Checksum 190: 16 Bit Prüfsumme über den Header und Datenbereich.

**Figur 4** zeigt ein Zwischenpaket 150 mit Kodieren von IP Optionen (in einem Byte). Hier kann der 0x0xx Block verwendet werden. Für die IP-Optionen mit einem Oktett (nur Optionstyp) wird die Zwischenschicht Länge zu 6 Oktetten; z.B. wäre die IP-Option "No Operation" [RFC 791] wie gezeigt kodiert. Das nächste Protokoll wird offengelassen und die Prüfsumme über die ersten vier Oktette korrekt berechnet.

**Figur 5** zeigt ein Zwischenpaket 150 mit einem Speicherplatz für 63 IP-Adressen in Anschluss an die IP-Option "Record Route" [RFC 791]. Diese Menge IP-Adressen übersteigt die der klassischen IP-Option (maximal 9 IP-Adressen) um eine Vielzahl. Hier sind die Oktette für den Header, die Prüfsumme und die 63 IP-Adressen in dem Längenfeld 180 (Wert 0x104, 260 Oktetten) des Zwischenpakets kodiert. Der Pointer zeigt auf das erste Oktett der zuletzt registrierten IP-Adresse, und hat als Mindestwert 6, da die erste IP-Adresse im sechsten Oktett anfängt.

Dadurch können maximal 255+3+2=260 Oktette benutzt werden für diese Ausführung der IP-Optionen, davon 2 für die Prüfsumme, 4 für den Header, und 2 für den Pointer (wegen der Ausführung der bei 1 anfängt). Es verbleiben 252 Oktette für 63 IP-Adressen mit einer Länge von 4 Oktetten.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

### Bezugszeichen

- 100: Datenpaket
- 110: Obere Schicht
- 120: Header
- 121: Nächstes-Protokollnummer-Feld
- 122: Länge
- 125: Nächste Protokollnummer
- 130: Erweiterter Header
- 140: Zwischenschicht
- 150: Zwischenpaket
- 151: Weiteres Zwischenpaket
- 152: Zwischenpaket-Header
- 153: Weiterer Zwischenpaket-Header
- 160: Nächstes-Protokollnummer-Feld des Zwischenpakets
- 161: Nächstes-Protokollnummer-Feld des weiteren Zwischenpakets
- 170: Spezifische Zwischenpaket-Protokollnummer
- 172: Weitere spezifische Zwischenpaket-Protokollnummer
- 180: Zwischenpaket Länge
- 181: Weitere Zwischenpaket Länge
- 190: Prüfsumme
- 191: Weitere Prüfsumme

## Patentansprüche

1. Ein Computer-implementiertes Verfahren zum Erweitern eines Headers (120), insbesondere eines Internet Protocol, IP, Headers, das Verfahren aufweisend:
Bereitstellen eines Datenpakets (100) das aufweist: eine obere Schicht (110) und eine untere Schicht (119),
wobei die untere Schicht (119) den Header (120) aufweist, und
wobei der Header (120) ein nächste-Protokollnummer-Feld (121) aufweist, in welches die Protokollnummer (125) des als nächstes auszuführenden Protokolls eingetragen wird; und
Einfügen zumindest eines Zwischenpakets (150) in eine Zwischenschicht (140) zwischen der oberen Schicht (110) und dem Header (120) mittels Eintragen der Zwischenschicht-Protokollnummer (125, 0xFF) in das nächste-Protokollnummer-Feld (121).

2. Das Verfahren gemäß Anspruch 1,
wobei das Zwischenpaket (150) ein nächste-Protokollnummer-Feld (160) des Zwischenpakets (150) aufweist, in welches die Protokollnummer des als nächstes auszuführenden Protokolls eingetragen wird.

3. Das Verfahren gemäß Anspruch 2, aufweisend:
Bereitstellen zumindest eines weiteres Zwischenpakets (151) zwischen dem Zwischenpaket (150) und der oberen Schicht (110) mittels Eintragen einer weiteren Zwischenschicht-Protokollnummer (125, 0xFF) in das nächste-Protokollnummer-Feld (160) des Zwischenpakets (150),
insbesondere wobei das weitere Zwischenpaket (151) ein weiteres nächste-Protokollnummer-Feld (161) des weiteren Zwischenpakets (151) aufweist, in welches die Protokollnummer des als nächstes auszuführenden Protokolls eingetragen wird.

4. Das Verfahren gemäß einem der vorhergehenden Ansprüche, aufweisend:
Einfügen der Protokollnummer (0x11) zum Identifizieren des Protokolls der oberen Schicht (110) als nächstes auszuführendes Protokoll in das nächste-Protokollnummer-Feld (160) des Zwischenpakets (150) oder das weitere nächste-Protokollnummer-Feld (161) des weiteren Zwischenpakets (151).

5. Das Verfahren gemäß einem der vorhergehenden Ansprüche, aufweisend:
Bereitstellen von Daten in das Zwischenpaket (150) und/oder das weitere Zwischenpaket (151).

6. Das Verfahren gemäß einem der vorhergehenden Ansprüche,
wobei der IP Standard IPv4 und/oder IPv6 verwendet wird, insbesondere für die untere Schicht (119).

7. Das Verfahren gemäß einem der vorhergehenden Ansprüche,
wobei die obere Schicht (110) eine TCP- und/oder eine UDP-Funktionalität aufweist.

8. Das Verfahren gemäß einem der vorhergehenden Ansprüche,
wobei das Datenpaket (100) zumindest eine registrierte, insbesondere IANA registrierte, Protokollnummer aufweist.

9. Das Verfahren gemäß einem der vorhergehenden Ansprüche,
wobei der Header (120) eine, insbesondere beliebige, Zwischenschicht-Protokollnummer (125, 0xFF), insbesondere IANA registriert, aufweist.

10. Das Verfahren gemäß einem der vorhergehenden Ansprüche,
wobei der Header (120) eine Zwischenschicht-Länge aufweist; und/oder
wobei der Zwischenschicht-Header (152) eine Zwischenschicht-Paket-Länge (180) aufweist; und/oder
wobei der weitere Zwischenschicht-Header (153) eine weitere Zwischenschicht-Paket-Länge (181) aufweist.

11. Das Verfahren gemäß einem der vorhergehenden Ansprüche,
wobei der Zwischenschicht-Header (152) eine spezifische Zwischenschicht-Protokollnummer (170, 0x3FF) aufweist; und/oder
wobei der weitere Zwischenschicht Header (153) eine weitere spezifische Zwischenschicht-Protokollnummer (171, 0x3FE), aufweist.

12. Das Verfahren gemäß einem der vorhergehenden Ansprüche,
wobei das zumindest eine Zwischenpaket (150) einem eigenen Protocol-Handler zugeordnet ist,
insbesondere wobei jedes Zwischenpaket (150, 151) einem eigenen Protocol-Handler zugeordnet ist.

13. Das Verfahren gemäß einem der vorhergehenden Ansprüche
wobei das Zwischenpaket (150) eine Prüfsumme (190) aufweist und/oder wobei das weitere Zwischenpaket (151) eine weitere Prüfsumme (191) aufweist,
insbesondere wobei die Prüfsumme (190, 191) ein Teil des jeweiligen Zwischenpaket-Headers (152, 153) ist.

14. Das Verfahren gemäß einem der vorhergehenden Ansprüche:
wobei das Verfahren im Kontext von Schienenfahrzeugen und/oder Schienenfahrzeug-Infrastruktur verwendet wird.

15. Eine Vorrichtung zur Datenverarbeitung, die zumindest einen Prozessor aufweist, und eingerichtet ist das Verfahren gemäß einem der vorhergehenden Ansprüche auszuführen.
